# EUROPÄISCHE PATENTSCHRIFT

(11) **EP 0 897 953 B1**
(45) Veröffentlichungstag und Bekanntmachung des Hinweises auf die Patenterteilung: **23.07.2003**
(21) Anmeldenummer: 98114992.5
(22) Anmeldetag: 10.08.1998
(51) Int. Cl.: C08L 27/06, C08F 265/04

(54) **Polyvinylchlorid-Formmassen**
Polyvinyl chloride moulding compositions
Masses à mouler à base de chlorure de polyvinyle

(30) Priorität: 16.08.1997 DE 19735477
(43) Veröffentlichungstag der Anmeldung: 24.02.1999
(73) Patentinhaber: SOLVIN S.A., 1120 Brüssel (BE)
(72) Erfinder: Görtz, Hans-Helmut, Dr., 67251 Freinsheim (DE); Wanzek, Reiner, 67067 Ludwigshafen (DE); Hahn, Susanne, Dr., 68165 Mannheim (DE); Meister, Martin, Dr., 67434 Neustadt (DE); Rauschenberger, Volker, Dr., 67304 Eisenberg (DE)
(74) Vertreter: Jacques, Philippe

(56) Entgegenhaltungen:
- EP-A- 0 134 389
- EP-A- 0 195 522
- DE-A- 2 717 046

## Beschreibung

Die Erfindung betrifft eine Polyvinylchlorid(PVC)-Formmasse, die geringe Mengen eines niedermolekularen Polyacrylats enthält und zu hochtransparenten Kalanderfolien verarbeitet werden kann.

Folien aus Hart-PVC werden nach dem Kalanderverfahren hergestellt. Dabei wird PVC-Pulver zunächst in einem Extruder plastifiziert und die heiße Masse dann über mehrere beheizte Walzen zu einer Folie verarbeitet. Die Dicke der Folien kann je nach Anwendungszweck in weiten Grenzen zwischen 0,05 und 2 mm liegen. Um transparente, fließlinienarme Folien mit geringer Klebeneigung auf den Walzen zu erzeugen, wird dem PVC ein Kalandrierhilfsmittel, meist auf Polyacrylat-Basis, zugesetzt. Dieses wird entweder mit PVC-Pulver vermischt oder es wird bei der Herstellung des PVC durch Suspensionspolymerisation von Vinylchlorid der wäßrigen Suspension zugesetzt.

Nach DE-B 25 31 197 wird die Suspensionspolymerisation von Vinylchlorid in Gegenwart von 0,1 bis 20 Gew.-% eines Mischpolymerisats aus einem (Meth-)Acrylsäureester und einem olefinisch ungesättigten Alkohol durchgeführt. Das Mischpolymerisat wird vorzugsweise durch Lösungs- oder Substanzpolymerisation herge- stellt. In der Praxis muß das bevorzugte Mischpolymerisat aus Butylacrylat und Butenol der besseren Handhabung wegen als methanolische Lösung eingesetzt werden. Dies hat zur Folge, daß das als Lösungsmittel verwendete Methanol aus dem Suspensionsmedium wieder abgetrennt werden muß. Nach DE-B 25 31 198 wird PVC-Pulver mit einer methanolischen Lösung des Butylacrylat/Butenol-Mischpolymerisats auf einer Walze vermischt, wobei Methanol in die Atmosphäre verdampft.

In der DE-A 27 17 046 ist ein Verfahren zur Herstellung von PVC beschrieben, das bei der Verarbeitung auf Kalanderwalzen nicht zum Ankleben neigt. Die Suspensionspolymerisation von Vinylchlorid wird in Gegenwart einer wäßrigen Emulsion eines Polyacrylats mit einem Viskositätsindex von 20 bis 60 1/kg, in Mengen von mindestens 1 Gew.-% (als Feststoff) durchgeführt. Die Herstellung des Polyacrylats erfolgt durch Polymerisation eines Acrylesters, vorzugsweise von Butylacrylat, in Gegenwart von verhältnismäßig geringen Mengen eines Kettenüberträgers. In den Beispielen werden 0,2 bis 0,5 Gew.-% 1-Dodecanthiol eingesetzt. Bei dem Verfahren nach DE-A 27 17 046 kann zwar auf die Mitverwendung von Methanol verzichtet werden, es hat sich aber gezeigt, daß PVC-Kalanderfolien, die nach diesem Verfahren erhalten werden, leicht getrübt, das heißt, nicht ausreichend transparent sind.

Der Erfindung lag nun die Aufgabe zugrunde, eine PVC-Formmasse bereitzustellen, die sich zu hochtransparenten, möglichst fließlinienfreien Kalanderfolien verarbeiten läßt, und die bei der Verarbeitung eine geringe Klebeneigung an den Walzen zeigt.

Diese Aufgabe wird erfindungsgemäß dadurch gelöst, daß man als Kalandrierhilfsmittel ein extrem niedermolekulares Polyacrylat einsetzt.

Gegenstand der Erfindung ist demzufolge eine PVC-Formmasse, die 0,1 bis 2 Gew.-% eines in wäßriger Emulsion polymerisierten Homooder Copolymeren aus einem oder mehreren C₁-C₄-Acrylestern und 0 bis 25 Gew.-% eines C₁-C₄-Hydroalkyl(meth-)acrylats mit einem K-Wert von 12 bis 25 (nach DIN 51 562) enthält.

Die Herstellung der erfindungsgemäß eingesetzten Polyacrylate erfolgt durch Polymerisation der Monomeren in wäßriger Emulsion unter üblichen Bedingungen, d.h. in Gegenwart von Emulgatoren und wasserlöslichen Radikalbildnern. Geeignete Emulgatoren sind z.B. Alkalisalze von C₁₀-C₁₈-Fettsäuren, C₁₀-C₁₈-Alkylsulfonsäuren, Schwefelsäurehalbestern mit C₁₀-C₁₈-Fettalkoholen, sulfobernsteinsäureester, dodecylierter Diphenylethersulfonsäure.

Geeignete Radikalbildner sind z.B. Natrium-, Kalium- und Ammoniumperoxodisulfat sowie übliche Redoxinitiatorsysteme, z.B. bestehend aus tert.-Butylhydroperoxid und Ascorbinsäure oder dem Natriumsalz der Hydroxymethansulfinsäure, sowie aus Natriumpersulfat und Natriumdithionit oder Natriumsulfit. Die Emulsionspolymerisation wird unter üblichen Bedingungen bei 50°C bis 100°C und einer Monomerkonzentration von 30 bis 70 Gew.-% durchgeführt. Bevorzugter Acrylester ist Butylacrylat, bevorzugte Comonomere sind Methyl- und Ethylacrylat, sowie 2-Hydroxyethylacrylat, 2-Hydroxypropylacrylat und 2-Hydroxyethylmethacrylat.

Wesentlich ist, daß die Emulsionspolymerisation in Gegenwart eines Kettenüberträgers durchgeführt wird. Geeignete Kettenüberträger sind Mercaptoverbindungen, insbesondere Alkanthiole, wie tert. Dodecylmercaptan (= 1-Dodecanthiol).

Sie werden in Mengen von vorzugsweise 1 bis 5 Gew.-%, bezogen auf die Monomeren, eingesetzt. Dies führt zu sehr niedermolekularen Polyacrylaten mit K-Werten (gemessen in einer Konzentration von 0,5 Gew.-% in Cyclohexanon mit einem Mikro-Ubbelohde-Viskosimeter nach DIN 51 562) zwischen 12 und 25, vorzugsweise zwischen 15 und 22.

Erfindungsgemäß enthalten die PVC-Formmassen 0,1 bis 2, vorzugsweise 0,2 bis weniger als 1,0 und insbesondere 0,25 bis 0,9 Gew.-% des Polyacrylats.

Bei einer bevorzugten Ausführungsform zur Herstellung der Formmassen wird Vinylchlorid in wäßriger Suspension in Gegenwart der 30 bis 70 gew.-%eigen wäßrigen Emulsion des Polyacrylats polymerisiert. Dabei werden die bei der Suspensionspolymerisation üblichen Bedingungen angewandt.

Als Monomeres kann entweder nur Vinylchlorid eingesetzt werden oder Mischungen von Vinylchlorid und anderen Monomeren (Comonomere) mit mindestens 60 Gew.-% Vinylchlorid, bezogen auf die Gesamtmasse der Monomeren. Als Comonomere des Vinylchlorids kommen insbesondere Vinylester, z.B. Vinylacetat, Vinylpropionat u.a., Vinylether wie Vinylmethylether, Vinylethylether, Vinylisobutylether u.a., Vinylidenchlorid, C₁-C₁₈-Alkylester der Acrylsäure wie Butylacrylat und 2-Ethylhexylacrylat, Dialkylmaleate wie Dibutylmaleat, Olefine wie Ethen, Propen, Isobuten und längerkettige C₆-C₁₅-Olefine, Diene wie Butadien sowie vinylaromatische Verbindungen wie Styrol in Betracht.

Bei der Suspensionspolymerisation werden die üblichen Schutzkolloide eingesetzt, wie teilverseifte Polyvinylalkohole oder Celluloseether, z.B. Methyl-, Methylhydroxyethyl- und Methylhydroxypropylcellulose. Polyvinylalkohole und Celluloseether können auch in Kombination eingesetzt werden.

Als monomerlösliche Initiatoren kommen bei der Suspensionspolymerisation übliche Peroxide, Perester, Percarbonate und Azoverbindungen in Betracht, beispielsweise Dilauroylperoxid, Dibenzoylperoxid, tert.-Butylperneodecanoat, tert.-Butylperpivalat, tert.-Butyl-2-ethylhexanoat, Trimethylpentylperneodecanoat, Diisopropylperoxidicarbonat, Di-n-butylperoxidicarbonat, Di-2-ethylhexylperoxidicarbonat, Dicyclohexylperoxidicarbonat, allein oder in Mischungen miteinander.

Vor, während oder nach der Suspensionspolymerisation kann der pH-Wert durch Zugabe von Puffersalzen wie Natriumphosphat, Natriumpolyphosphat oder Natriumhydrogencarbonat eingestellt werden.

Die Polymerisationstemperatur richtet sich nach dem gewünschten Molekulargewicht bzw. K-Wert des Produktes und liegt zwischen 20 und 100°C, vorzugsweise zwischen 35 und 80°C, für die meisten Produkte zwischen 45 und 70°C. Die Polymerisation wird im allgemeinen bei einem Umsatz von 60 bis 95 %, bevorzugt 70 bis 90 %, durch Zusatz üblicher Stopper abgebrochen. Für die Anwendung als Kalanderfolien sollte das PVC K-Werte (nach DIN 53 726) von 55 bis 70, insbesondere von 57 bis 65 aufweisen.

Die Polymerisation wird bei Drücken von 5 bis 30 bar durchgeführt, vorzugsweise bei 8 bis 20 bar, wobei der Druck im allgemeinen durch den Dampfdruck des Vinylchlorids bei der gewünschten Polymerisationstemperatur vorgegeben wird.

Grundsätzlich ist es auch möglich, die wäßrige Emulsion des Polyacrylats in eine PVC-Schmelze einzuarbeiten. Dies kann auf üblichen Mischaggregaten, z.B. Extrudern, Knetern oder Walzwerken geschehen, wobei Temperaturen von 160 bis 200°C, insbesondere 170 bis 195°C angewandt werden. Bevorzugt erfolgt die Zugabe zu PVC-Pulver beim Plastifizieren auf dem Extruder vor der Kalanderverarbeitung.

Die in den Beispielen genannten Prozente beziehen sich auf das Gewicht.

Im folgenden ist zunächst die Herstellung der Polyacrylat-Emulsionen beschrieben.

### Emulsion A1 (Vergleich)

Beispiel 1 von DE-A 27 17 046 wurde nachgearbeitet, wobei als Regler 0,5 % tert.-Dodecylmercaptan eingesetzt wurden. Der Viskositätsindex (gemessen bei 25° in 0,5 %iger Cyclohexan-Lösung) betrug 40,7 1/kg, was in guter Übereinstimmung mit dem in DE-A 27 17 046 angegebenen Wert von 38 1/kg ist. Der K-Wert (nach DIN 51 562) wurde zu 41 ermittelt.

### Emulsion A2

In einer N₂-gespülten und mit Heizung/Kühlung ausgestatteten 2-1-Rührapparatur wurden 300 g destilliertes Wasser und 2,4 g einer 33,3 %igen wäßrigen Polystyroldispersion mit einer Teilchengröße von 30 nm vorgelegt und unter Rühren auf 90°C aufgeheizt. Nach Erreichen dieser Temperatur wurden 25 g einer Mischung, bestehend aus 400 g n-Butylacrylat, 2 g tert.-Dodecylmercaptan (0,5 %), 100 g destilliertes Wasser, 0,8 g Natriumpyrophosphat und 2 g des Natriumsalzes einer dodecylierten Diphenylethersulfonsäure, zugegeben. Der restliche Hauptteil der Mischung wurde innerhalb von 3 h zudosiert. Parallel dazu wurde innerhalb von 3,5 h eine Lösung von 0,8 g Natriumperoxodisulfat in 100 g Wasser zudosiert, nach Zugabeende noch 30 min auf 90°C gehalten und anschließend abgekühlt. Die erhaltene Dispersion wies einen Feststoffanteil von 43,8 % und einen pH-Wert von 5,3 auf. Der K-Wert betrug 34,2, die Viskositätszahl 32,3 ml/g, beides 0,5 %ig in Cyclohexanon gemessen.

### Emulsion B1

Es wurde wie bei der Herstellung der Emulsion A2 verfahren, mit der Änderung, daß anstatt 2 g tert.-Dodecylmercaptan 10 g tert.-Dodecylmercaptan (2,5 %) eingesetzt wurden.

Die erhaltene Dispersion wie einen Feststoffanteil von 43,7 % und einen pH-Wert von 5,1 auf. Der K-Wert betrug 16,0, die Viskositätszahl 8,3 ml/g, beides 0,5 %ig in Cyclohexanon gemessen.

### Emulsion B2

Es wurde genauso verfahren wie bei Emulsion B1, mit der Änderung, daß in der Zulaufmischung anstelle von 400 g n-Butylacrylat eine Mischung aus 200 g n-Butylacrylat und 190 g Methylacrylat eingesetzt wurde.

Die erhaltene Dispersion wies einen Feststoffanteil von 43,2 % und einen pH-Wert von 5,3 auf. Der K-Wert betrug 15,6, die Viskositätszahl 7,9 ml/g, beides 0,5 %ig in Cyclohexanon gemessen.

### Emulsion B3

Es wurde genauso verfahren wie bei Emulsion B1, mit der Änderung, daß in der Zulaufmischung anstelle von 400 g n-Butylacrylat eine Mischung aus 380 g n-Butylacrylat und 20 g 2-Hydroxylethylacrylat eingesetzt wurde.

Die erhaltene Dispersion wies einen Feststoffanteil von 43,7 % und einen pH-Wert von 5,7 auf. Der K-Wert betrug 15,1, die Viskositätszahl 7,5 ml/g, beides 0,5 %ig in Cyclohexanon gemessen.

Vergleichsbeispiel Analog der Vorgehensweise in Beispiel 1 (Teil b) der DE-OS 2 717 046 wurden in einem 3 1 Stahlautoklaven, unter Rühren bei 200 upm, 870 g entmineralisiertes Wasser, 37 g einer 4 %igen Lösung eines Polyvinylalkohols mit Hydrolysegrad 72 mol-%, 0,2 g Laurylalkohol, 0,27 g Lauroylperoxid, 39,4 g der Emulsion A1 und 0,17 g Diethylperoxydicarbonat vorgelegt. Der Autoklav wurde verschlossen und bei 500 upm 10 min gerührt. Nach partiellem Evakuieren und anschließender Stickstoffspülung wurden 667 g Vinylchlorid zugegeben und auf 66°C aufgeheizt. Bei dieser Temperatur wurde 8 h polymerisiert und dann entgast, das gebildete PVC abgetrennt und getrocknet.

### Vergleichsbeispiel 2

In einem 3 l-Stahlautoklaven wurden 1260 g entmineralisiertes Wasser 1,4 g Hydroxypropylmethylcellulose, 1,05 g Natriumtripolyphosphat, 8 g von Emulsion A2, 0,32 g Lauroylperoxid und 0,22 g tert.-Butylperneodecanoat vorgelegt und der Autoklav geschlossen. Dann wurde bis zu einem Druck von 10 bar Stickstoff aufgepreßt, wieder auf Normaldruck entspannt und dann bis zu einem Druck von weniger als 100 mbar evakuiert. Dann wurden unter Rühren bei 250 rpm 700 g Vinylchlorid zugegeben und bei 750 rpm auf 64°C aufgeheizt. Bei dieser Temperatur wurde solange polymerisiert, bis der Druck um 2 bar unter den Polymerisationsdruck abgefallen war (ca. 3,5 bis 4 h). Danach wurde entspannt und im Vakuum das restliche Vinylchlorid entfernt. Das erhaltene Polyvinylchlorid wurde abfiltriert, mit entmineralisiertem Wasser gewaschen und bei 50°C getrocknet.

### Beispiel 1

Es wurde gearbeitet wie in Vergleichsbeispiel 2, wobei jedoch 8,0 g der Emulsion B1 zugesetzt wurden.

### Beispiel 2

Es wurde gearbeitet wie in Beispiel 1, wobei aber 8,1 g der Emulsion B2 zugesetzt wurden.

### Beispiel 3

Es wurde gearbeitet wie in Beispiel 1, wobei aber 4,0 g der Emulsion B3 zugesetzt wurden.

### Beispiel 4 bis 6

Jeweils 50 g PVC vom K-Wert 61 (VINOFLEX S 6115 der BASF AG) wurden mit den in der Tabelle angegebenen Mengen Emulsion B1-B3 und 0,5 g Zinnstabilisator in einer Emailleschale vorgemischt. Die Mischung wurde dann auf ein Labormischwalzwerk aufgegeben und unter dem unten angegebenen Bedingungen homogenisiert.

### Beurteilung des Klebeverhaltens (Klebetest)

50 g des zu prüfenden polyacrylatmodifizierten PVC-Pulvers werden in einer Emailleschale mittels eines Spatels mit 0,5 g Zinnstabilisator (Irgastab 17 MOK, Ciba Spezialitäten) vorgemischt.

Ein übliches Labormischwalzwerk (Fa. Berstorff) wird auf 190°C aufgeheizt und die Walzen mit Reinigungsgranulat (Pb-stabilisiertes PVC-Granulat) und etwas Vim-Haushaltsreiniger vorgereinigt. Nach Entnahme des Reinigungsfells werden die Stahlwalzen fest mit einem Handtuch abgerieben. Nach Aufgabe der zu plastifizierenden Mischung auf den Walzenspalt (Zeitpunkt Null), der bis zur Fellbildung sehr eng eingestellt wird (0,5 mm; beide Walzen 15 rpm), wird das gebildete Fell laufend abgelöst, gewendet und wieder in den Spalt gegeben. Dies wird solange fortgeführt, bis ein sehr starkes Haften (Kleben) eintritt. Wird kein Kleben beobachtet, so wird der Versuch nach 30 min abgebrochen.

### Beurteilung der Transparenz

a) Walzfellherstellung
   Es wird zunächst ein Walzfell hergestellt. Hierzu wird in gleicher Weise wie bei der Beurteilung des Klebeverhaltens vorgegangen, jedoch mit folgenden Änderungen: Walzentemperatur 170°C; eine Walze 13 rpm, die andere Walze 15 rpm; Spalt 0,6 mm; Gesamtdauer 8 min
b) Preßplattenherstellung
   Für die Herstellung der 3 mm dicken Preßplatten werden aus dem Walzfell 30 x 60 mm große Stücke ausgestanzt und in einen entsprechenden Preßrahmen gelegt. Wegen des zu erwartenden Überlaufs werden ca. 10 % mehr eingelegt als dem Gewicht der fertigen Preßplatte entspricht. Die Pressung erfolgt auf einer Laborpresse mit elektrischer Beheizung, Digitalthermometer und Druckanzeige (Fa. Werner & Pfleiderer) zwischen verchromten Preßblechen (20 x 20 cm). Preßbedingungen: 8 min Vorheizen bei 180°C und 5 bar; 5 min Pressen bei 180°C und 200 bar; 10 min Abkühlen auf 25°C bei 200 bar.
c) Transparenzmessung

Die Messung von Durchlicht und Streulicht erfolgt an einem System-Photometer PMQ 3 der Firma Zeiss, das mit einem Kugelansatz KA ausgestattet ist (mit Öffnungsklappe für Streulichtmessung).

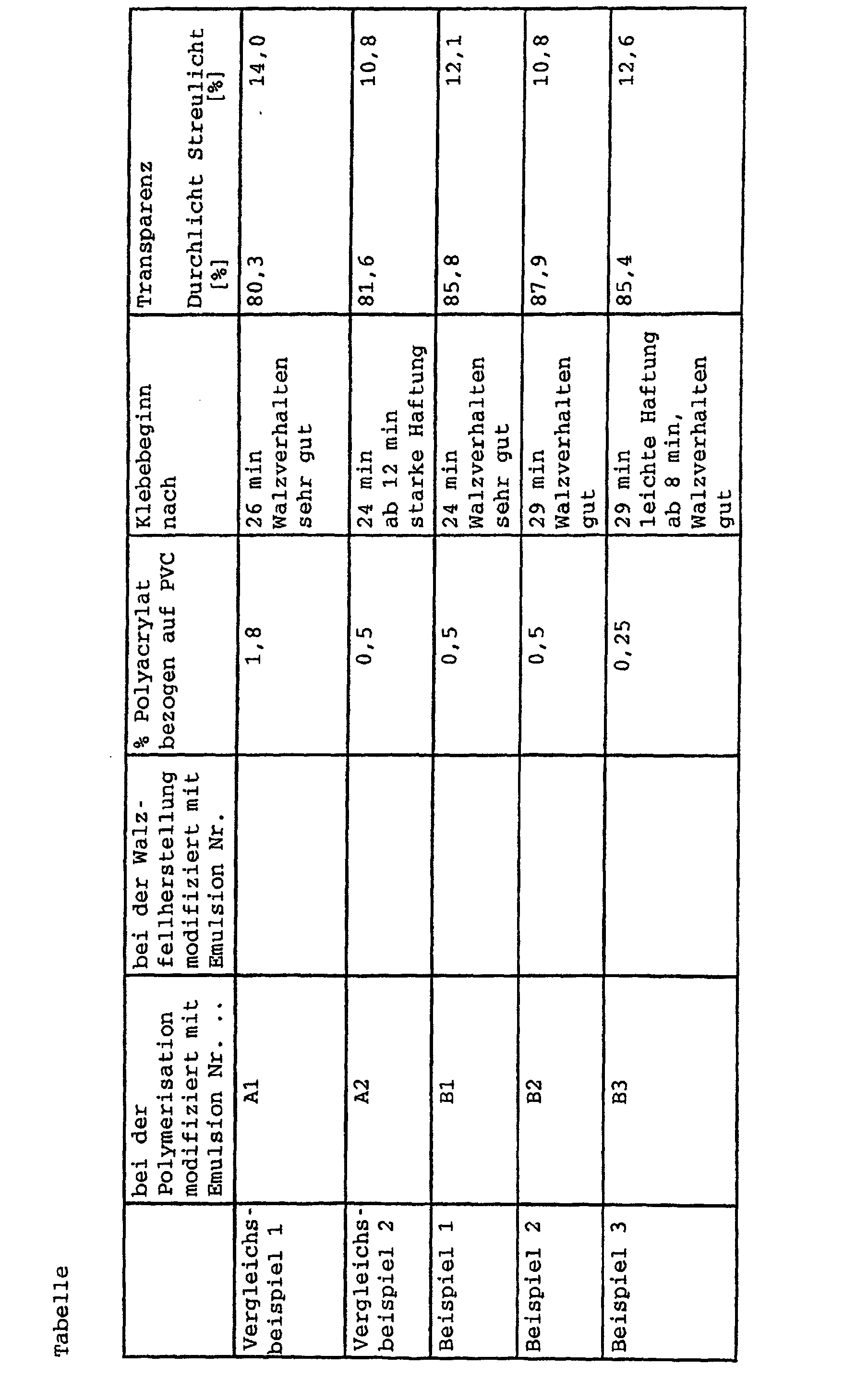

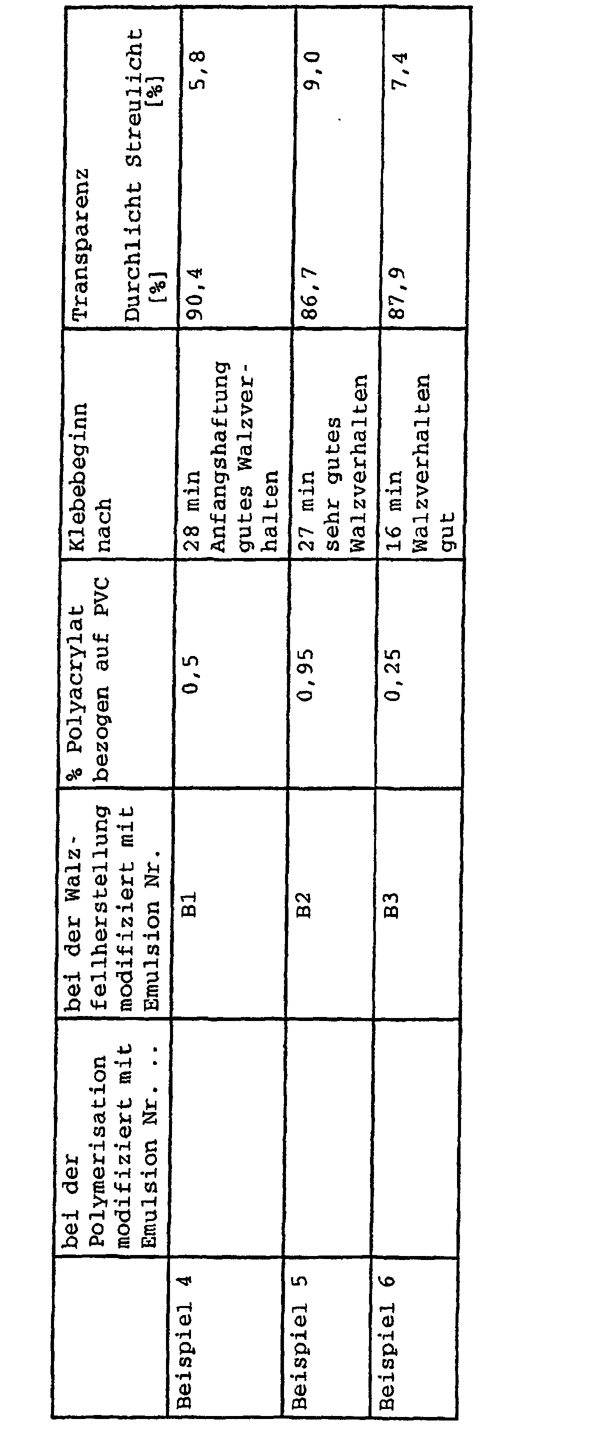

## Patentansprüche

1. Polyvinylchlorid-Formmasse, enthaltend Polyvinylchlorid und 0,1 bis 2 Gew.-% eines in wäßriger Emulsion polymerisierten Polyacrylats, **dadurch gekennzeichnet, daß** das Polyacrylat ein Homo- oder Copolymeres ist aus einem oder mehreren C₁-C₄-Acrylestern und 0 bis 25 Gew.-% eines C₁-C₄-Hydroxyalkyl(meth)acrylats mit einem K-Wert (nach DIN 51562) zwischen 12 und 25.

2. Verfahren zur Herstellung der PVC-Formmasse nach Anspruch 1, **dadurch gekennzeichnet, daß** Vinylchlorid in wäßriger Suspension in Gegenwart einer 30 bis 70 gew.-%igen wäßrigen Emulsion des Polyacrylats polymerisiert wird

3. Verfahren zur Herstellung der PVC-Formmasse nach Anspruch 1, **dadurch gekennzeichnet, daß** eine wäßrige Emulsion des Polyacrylats in eine PVC-Schmelze eingearbeitet wird.

4. Verwendung der PVC-Formmasse nach Anspruch 1 zur Herstellung von hochtransparenten Kalanderfolien.

## Claims

1. Polyvinyl chloride moulding composition comprising polyvinyl chloride and 0.1 to 2% by weight of a polyacrylate polymerized in aqueous emulsion, **characterized in that** the polyacrylate is a homo- or copolymer made from one or more C₁-C₄ acrylic esters and 0 to 25% by weight of a C₁-C₄ hydroxyalkyl (meth)acrylate with a K value (according to DIN 51562) of from 12'to 25.

2. Process for preparing a PVC moulding composition according to Claim 1, **characterized in that** vinyl chloride is polymerized in aqueous suspension in the presence of a 30 to 70% by weight aqueous emulsion of the polyacrylate.

3. Process for preparing a PVC moulding composition according to Claim 1, **characterized in that** an aqueous emulsion of the polyacrylate is incorporated' into a PVC melt.

4. Use of a PVC moulding composition according to Claim 1 for producing highly transparent calendered sheets.

## Revendications

1. Masse à mouler de poly(chlorure de vinyle), contenant du poly(chlorure de vinyle) et 0,1 à 2% en poids d'un polyacrylate polymérisé en émulsion aqueuse, **caractérisée en ce que** le polyacrylate est un homo- ou copolymère d'un ou plusieurs esters acryliques en C₁ à C₄, et 0 à 25% en poids d'un (meth)acrylate d'hydroxyalkyle en C₁ à C₄, ayant un nombre K (d'après DIN 51562) compris entre 12 et 25.

2. Procédé de préparation de la masse à mouler de PVC selon la revendication 1, **caractérisé en ce que** le chlorure de vinyle est polymérisé en suspension aqueuse en présence d'une émulsion aqueuse du polyacrylate de 30 à 70% en poids.

3. Procédé de préparation de la masse à mouler de PVC selon la revendication 1, **caractérisé en ce qu'**une émulsion aqueuse du polyacrylate est incorporée dans une masse fondue de PVC.

4. Utilisation de la masse à mouler de PVC selon la revendication 1, pour préparer des feuilles hautement transparentes calandrées.
